# EUROPÄISCHE PATENTSCHRIFT

(11) **EP 3 615 299 B1**
(45) Veröffentlichungstag und Bekanntmachung des Hinweises auf die Patenterteilung: **23.06.2021**
(21) Anmeldenummer: 18721727.8
(22) Anmeldetag: 25.04.2018
(51) Int. Cl.: B29C 49/48, B29C 49/36, B29C 49/46

(54) **UMFORMUNGSSTATION ZUM UMFORMEN VON KUNSTSTOFFVORFORMLINGEN MIT BEFESTIGUNGSMECHANISMUS FÜR SEITENTEILE**
RESHAPING STATION FOR RESHAPING PLASTIC PREFORMS, COMPRISING A SECURING MECHANISM FOR LATERAL PARTS
STATION DE FORMAGE POUR LE FORMAGE D'ÉBAUCHES EN MATIÈRE PLASTIQUE COMPRENANT UN MÉCANISME DE FIXATION POUR DES PARTIES LATÉRALES

(30) Priorität: 25.04.2017 DE 102017108795
(43) Veröffentlichungstag der Anmeldung: 04.03.2020
(73) Patentinhaber: Krones AG, 93073 Neutraubling (DE)
(72) Erfinder: KINDL, Norbert, 93073 Neutraubling (DE); GELTINGER, Florian, 93073 Neutraubling (DE)
(74) Vertreter: Bittner, Bernhard
(86) Internationale Anmeldenummer: PCT/EP2018/060634
(87) Internationale Veröffentlichungsnummer: WO 2018/197580

(56) Entgegenhaltungen:
- DE-C1- 3 613 543
- US-A1- 2002 076 463
- US-A1- 2003 082 262
- US-A1- 2012 091 634

## Beschreibung

Die vorliegende Erfindung bezieht sich auf eine Umformungsstation zum Umformen von Kunststoffvorformlingen zu Kunststoffbehältnissen.

Aus dem Stand der Technik ist es seit langem bekannt, dass erwärmte Kunststoffvorformlinge in sogenannte Umformungsstationen bzw. Blasstationen eingegeben werden und dort unter Verwendung von Druckluft zu Kunststoffbehältnissen und insbesondere Kunststoffflaschen expandiert werden. Zu diesem Zweck werden sogenannte Blasformen eingesetzt, welche in ihrem Inneren eine Wandung aufweisen, welche die Kontur des herzustellenden Behältnisses ausbildet. Diese Blasformen sind üblicherweise an Blasformträgern gehaltert.

Die Blasformträger können zum Einbringen der Kunststoffvorformlinge geöffnet werden, anschließend um die Kunststoffvorformlinge herum geschlossen werden, und der im Inneren befindliche Kunststoffvorformling durch Druckluft expandiert werden. Üblicherweise sind die Blasformen über Blasformschalen an den Seitenteilträgern angeordnet. Diese Vorgehensweise hat sich im Stand der Technik bewährt und insbesondere auch zur Stabilität beigetragen. Der Nachteil diese Ausführungsform besteht jedoch darin, dass derartige Umformungsstationen einen relativ hohen Platz bzw. Bauraum benötigen.

Eine Umformungsstation nach dem Oberbegriff des Anspruchs 1 wird in US2012091634A1 offenbart. Weitere Umformungsstationen werden in DE3613543C1, US2003124212A1 und US2003082262A1 offenbart.

Der vorliegenden Erfindung liegt daher die Aufgabe zugrunde, den Bauraum für derartige Anlagen zu verringern. Diese Aufgabe wird erfindungsgemäß durch den Gegenstand des unabhängigen Anspruchs erreicht. Vorteilhafte Ausführungsformen und Weiterbildungen sind Gegenstand der Unteransprüche.

Eine erfindungsgemäße Umformungsstation zum Umformen von Kunststoffvorformlingen zu Kunststoffbehältnissen weist eine Blasform zum Umformen von Kunststoffvorformlingen zu Kunststoffbehältnissen auf, welche Blasform ein Bodenteil, ein erstes Seitenteil und ein zweites Seitenteil aufweist. Dabei bildet dieses Bodenteil gemeinsam mit den Seitenteilen in einen zusammengesetzten Zustand der Blasform einen Hohlraum aus, innerhalb dessen die Kunststoffvorformlinge zu den Kunststoffbehältnissen expandierbar sind. Weiterhin ist eine Trageeinrichtung zum Tragen der Blasform vorgesehen, wobei die Trageeinrichtung einen ersten Seitenteilträger und einen zweiten Seitenteilträger aufweist, und wobei das erste Seitenteil an dem ersten Seitenteilträger und das zweite Seitenteil an dem zweiten Seitenteilträger angeordnet ist.

Erfindungsgemäß ist wenigstens ein Seitenteil unmittelbar an dem ihm zugeordneten Seitenteilträger angeordnet.

Bei dieser erfindungsgemäßen Ausgestaltung wird daher vorgeschlagen, dass auf die im Stand der Technik stets verwendeten Formträgerschalen verzichtet wird. Die Anmelderin hat herausgefunden, dass im Gegensatz zur bisherigen Annahme im Stand der Technik die üblicherweise zwischengeschalteten Formträgerschalen unter bestimmten Umständen entbehrlich sein können. Bevorzugt liegt das wenigstens eine Seitenteil flächig an den ihm zugeordneten Seitenteilträger an und ist besonders bevorzugt daran befestigt. Auf diese Weise wird insgesamt eine kleinere Bauweise erreicht. Vorteilhaft sind die Seitenteilträger bezüglich einander schwenkbar. Insbesondere sind die Seitenteilträger bezüglich einander und bezüglich einer Achse schwenkbar, welche parallel zu einer Längsrichtung der zu expandierenden Vorformlinge verläuft. Bei einer bevorzugten Ausführungsform weist die Umformungsstation auch einen Bodenteilträger auf, der dazu geeignet und bestimmt ist, das Bodenteil zum Umformen der Kunststoffvorformlinge zu tragen. Bevorzugt ist das Bodenteil an diesem Bodenteilträger befestigt.

Bei einer besonders bevorzugten Ausführungsform ist auch das andere Seitenteil unmittelbar an dem ihm zugeordneten Seitenteilträger angeordnet. Damit sind bei dieser Ausgestaltung beide Seitenteile jeweils unmittelbar an dem jeweils zugeordneten Träger befestigt. Damit werden bevorzugt beide Seitenteile direkt in die jeweiligen Seitenteilträger eingelegt. Diese Seitenteile weisen bevorzugt eine Wandung bzw. eine Kontur auf, welche zum Ausbilden der Kunststoffbehältnisse dient.

Durch diese Maßnahme kann der benötigte Bauraum für die Vorrichtung weiter reduziert werden.

Bei einer bevorzugten Ausführungsform sind beide Seitenteile unmittelbar an denen ihnen zugeordneten Seitenteilträgern ohne Verwendung und/oder Zwischenschaltung eines Drucckissens angeordnet. Damit wird bei dieser Ausführungsform auf ein Druckkissen verzichtet. Derartige Druckkissen werden üblicherweise im Stand der Technik verwendet, um bei der Beaufschlagung der Kunststoffvorformlinge einen entstehenden Formspalt möglichst klein zu halten.

Es hat sich jedoch überraschender Weise herausgestellt, dass gerade durch das Weglassen der Schalen und den dadurch reduzierten Bauraum im Arbeitsbereich auch ein besseres Aneinanderpressen der Seitenteile ermöglicht wird und so auch auf ein Druckkissen verzichtet werden kann.

Insgesamt kann auf diese Weise ein deutlich kleinerer "Footprint"' der gesamten Anlage erreicht werden. Auch kann durch diese Vorgehensweise eine Energieeinsparung sowie auch eine Kosteneinsparung ermöglicht werden.

Es wird daher vorgeschlagen, dass die Blasform direkt und auf beiden Seiten in den Formträger eingelegt wird, und wie oben erwähnt, die Aufnahmeschale entfällt.

Bei einer weiteren vorteilhaften Ausführungsform ist wenigstens ein Seitenteilträger und/oder ein Seitenteil temperierbar. Im Stand der Technik werden üblicherweise die Formträgerschalen temperiert, um letztlich damit auch die Blasformen zu temperieren. Im Rahmen der vorliegenden Erfindung wird jedoch vorgeschlagen, dass nicht die (nicht vorhandenen) Formträgerschalen temperiert werden, sondern eben der eigentliche Seitenteilträger. Es wird jedoch darauf hingewiesen, dass diese Ausgestaltung, bei der der Seitenteilträger temperiert wird, auch unabhängig von der oben genannten Erfindung beansprucht werden kann bzw. vorgeschlagen wird. Bei dieser Ausgestaltung wird eine Vereinfachung insbesondere eines Montagevorganges erreicht. In diesem Falle können entsprechende Temperieranschlüsse an der Maschine verbleiben und müssen nicht gemeinsam mit einer Blasform ausgewechselt werden.

Die Anmelderin behält sich daher auch vor, Schutz zu beanspruchen für eine Umformungsstation zum Umformen von Kunststoffvorformlingen zu Kunststoffbehältnissen mit einer Blasform zum Umformen von Kunststoffvorformlingen zu Kunststoffbehältnissen, welche Blasform ein Bodenteil, ein erstes Seitenteil und ein zweites Seitenteil aufweist, wobei dieses Bodenteil mit den Seitenteilen in einem zusammengesetzten Zustand der Blasform einen Hohlraum ausbildet, innerhalb dessen die Kunststoffvorlinge zu den Kunststoffbehältnissen expandierbar sind und weiterhin eine Trageeinrichtung und zum Tragen der Blasform vorgesehen ist, wobei erfindungsgemäß diese Trageinrichtung Temperiermittel zum Temperieren der Blasform aufweist.

Diese Temperierung kann bespielweise durch elektrische Kühlelemente erfolgen, bevorzugt jedoch erfolgt diese Temperierung, wie unten genauer erläutert, durch ein fließfähiges und insbesondere flüssiges Temperiermittel.

Unter einem Temperieren wird verstanden, dass der Seitenteilträger mit einer Temperatur beaufschlagt bzw. temperiert werden kann, welche von der Arbeitstemperatur der Anlage abweicht. Insbesondere ist es möglich, den Seitenteilträger zu erwärmen, um damit auch die Blasform zu erwärmen. Es wäre auch denkbar, dass die Seitenteilträger gekühlt werden, um auf diese Weise auch die Ihnen zugeordneten Blasformseitenteile zu kühlen.

Bei einer weiteren vorteilhaften Ausführungsform weist wenigstens ein Seitenteilträger und/oder ein Seitenteil einen Temperiermittelkanal zum Leiten eines fließfähigen und insbesondere flüssigen Temperiermittels auf. Wie oben erwähnt, sind diese Kanäle sonst üblicherweise an den Trägerschalen oder der Blasform angeordnet. Bei der hier beschriebenen Ausführungsform ist dieser Temperiermittelkanal an dem Seitenteilträger vorgesehen. Dies hat, wie oben erwähnt, den Vorteil, dass Blasformwechsel weniger kompliziert durchgeführt werden können, und insbesondere keine Montage- und Demontage von Kühlmittelanschlüssen erforderlich ist. Es ist damit bevorzugt, wenn der Seitenteilträger über wenigstens einen Temperiermittelkanal verfügt, der das Führen eines fließfähigen Temperiermittels ermöglicht.

Bei einer weiteren vorteilhaften Ausführungsform weist wenigstens ein Seitenteilträger und/oder ein Seitenteil wenigstens zwei Medienkupplungen auf. Bevorzugt ermöglichen diese zwei Medienkupplungen einen Vorlauf und einen Rücklauf für ein Temperiermittel. Über diese Medienkupplungen kann damit bevorzugt dem Seitenteilträger ein Temperiermittel zugeführt werden und dieses auch wieder aus dem Seitenteilträger abgeführt werden. Diese Ausgestaltung ist insbesondere bei solchen Vorrichtungen vorteilhaft, welche über kein Druckkissen verfügen. Vorteilhaft weisen beide Seitenteilträger jeweils Temperiermittelkanäle auf.

Bei einer weiteren vorteilhaften sind die wenigstens zwei Medienkupplungen manuell, halbautomatisch oder vollautomatisch lösbar. Besonders bevorzugt sind diese Medienkupplungen mittels eines Roboters vollautomatisch lösbar. Auf diese Weise kann ein robotergestütztes Wechseln der Blasformen erleichtert werden.

Bei einer weiteren vorteilhaften Ausführungsform sind die wenigstens zwei Medienkupplungen selbstdichtend ausgeführt. So können diese Medienkupplungen einen Dichtungsmechanismus aufweisen der sich bei einem Lösen der Kupplungen selbsttätig schließt und so einen Austritt von Temperiermittel verhindert.

Bei einer weiteren bevorzugten Ausführungsform ist die Umformungsstation sterilisierbar ausgeführt. Bevorzugt ist die Umformungsstation mit Materialien und Elementen ausgestattet, welche die Beaufschlagung der Umformungsstation mit einem (insbesondere fließfähigen) Sterilisationsmedium ermöglichen.

Bei einer weiteren bevorzugten Ausführungsform kann die Umformungsstation zumindest in einem Arbeitsbetrieb in einem Reinraum angeordnet sein. Hierbei handelt es sich bevorzugt um einen Reinraum, der zumindest den Transportpfad der Umformungsstationen umgibt. Dieser Reinraum kann dabei in einem Arbeitsbetrieb die Umformungsstationen kanalartig umgeben. Bevorzugt handelt es sich um einen Reinraum, der andere Bestandteile der gesamten Umformungsstation, wie insbesondere aber nicht ausschließlich Bestandteile des Trägers, an dem die Umformungsstationen angeordnet sind, nicht umgibt.

Bei einer weiteren vorteilhaften Ausführungsform ist wenigstens ein Seitenteil an dem ihm zugeordneten Seitenteilträger mittels eines Befestigungsmechanismus befestigt, und wenigstens ein Bestandteil dieses Befestigungsmechanismus ist zumindest teilweise in den Seitenteilträger integriert. Bei den hier beschriebenen Ausführungsformen wird die Blasform direkt durch den Blasformträger, der über die oben erwähnten Temperiermittelbohrungen verfügt, temperiert.

Die Befestigungseinrichtung bzw. die Befestigungsmittel zum Fixieren der Blasform in dem Seitenteilträger werden besonders bevorzugt direkt in dem Seitenteilträger positioniert und/oder erzeugen eine Form bzw. einen Kraftschluss zwischen der Blasform und dem Seitenteilträger. Es ist sowohl möglich, diese Befestigungsmittel wahlweise manuell zu aktivieren oder zu deaktivieren, oder aber über einen Formenwechsel und insbesondere einen vollautomatischen Formenwechsel pneumatisch, hydraulisch oder elektrisch zu aktivieren.

Bei einer weiteren vorteilhaften Ausführungsform weisen die Seitenteilträger Zentrierelemente auf, welche die auf die Bodenform einwirkenden Kräfte aufnehmen. Die auf die Bodenform wirkenden Axialkräfte infolge des Innendrucks werden bevorzugt in den Seitenteilträger übertragen. Durch eine formschlüssige Verbindung zwischen dem Zentrierelement im Seitenteilträger und dem korrespondierenden Gegenstück an der Bodenform erfolgt die Kraftübertragung.

Vorteilhaft sind diese Zentrierelemente für den Bodenteilträger bzw. das Bodenteil direkt in dem Seitenteilträger bzw. den Formträger positioniert und erzeugen einen Form- und/oder Kraftschluss zwischen der Bodenform und dem Formträger.

Bei einer weiteren vorteilhaften Ausführungsform weisen die Seitenteilträger Verstärkungsrippen auf. Vorteilhaft sind dabei diese Verstärkungsrippen an einer Außenseite des Formträgers, das heißt, an einer Seite, welche derjenigen Seite, an der die Seitenteile befestigt werden, gegenüberliegt, angeordnet. Dabei können diese Verstärkungsrippen bevorzugt horizontal verlaufen. Bevorzugt ist dabei wenigstens eine derartige Verstärkungsrippe vorgesehen, bevorzugt wenigstens zwei, und besonders bevorzugt wenigstens drei Verstärkungsrippen.

Diese Verstärkungsrippen sind dabei bevorzugt parallel zueinander. Bei einer weiteren bevorzugten Ausführungsform weisen diese Seitenteilträger die besagten Verstärkungsrippen auf. Bevorzugt sind diese Verstärkungsrippen der beiden Seitenteilträger bezüglich einander in der Längsrichtung der jeweiligen Seitenteilträger versetzt.

Dies bedeutet, dass beispielsweise das linke Seitenteil einer bestimmten Umformungsstation Verstärkungsrippen aufweist, und das diesem benachbarte rechte Seitenteil einer benachbarten Umformungsstation ebenfalls Verstärkungsrippen und diese in der Längsrichtung zueinander versetzt sind. Dies bedeutet, dass bei einem Öffnen der einzelnen Umformungsstationen diese Verstärkungsrippen nicht aneinander zu Anliegen kommen, sondern bevorzugt wie Verstärkungsrippen eines Seitenteils in Zwischenräume von Verstärkungsrippen eines weiteren Seitenteils eingreifen. Auf diese Weise kann ebenfalls der Bauraum reduziert werden, da die einzelnen Umformungsstationen in der Umfangsrichtung eines Blasrades oder Trägers näher zueinander beabstandet gebaut werden können.

Es ist denkbar, dass die Rippen zweier benachbarter Formträger ineinandergreifen. Bevorzugt weisen die Seitenteilträger auch eine durchgehende Formträgerstruktur auf, an der besonders bevorzugt diese Rippen angeordnet sind. Die oben erwähnten Kühlbohrungen verlaufen besonders bevorzugt in einem hinteren bzw. vorderen Bereich des Seitenteilträgers in der besagten durchgehenden Formträgerstruktur. Bevorzugt verlaufen damit diese Kühlmittelbohrungen nicht durch die besagten Rippen.

Durch diese Anordnung der Rippen kann das lichte Öffnungsmaß des Formträgersystems in maximalen Öffnungsstellung (das heißt, in dem Bereich, in dem die Kunststoffvorformlinge eingegeben und die geblasenen Flaschen entnommen werden) in etwa um den Faktor 1,1 bis 1,5 des maximal zu verarbeitenden Behältnisdurchmessers betragen.

Bei einer weiteren vorteilhaften Ausführungsform weist eine Formaußenkontur der Seitenteilträger einer runde oder eine v-förmige Mantelfläche auf.

Bei einer weiteren vorteilhaften Ausführungsform weist die Formaußenkontur bzw. die Anbauteile eine Durchmesserveränderung auf, um eine vertikale Zentrierung zu ermöglichen. Die vertikale Zentrierung ist besonders bevorzugt ringförmig ausgebildet und verläuft bevorzugt im Mantelbereich der Form. So kann an den Seitenteilen ein Zentrierelement ausgebildet sein, welches mit einem entsprechenden Gegenstück, welches an dem Bodenteil angeordnet ist zusammenwirkt, um die besagte Zentrierung zu erreichen. So kann beispielsweise ein an den Seitenteilen angeordneter Vorsprung in eine entsprechende an dem Bodenteil ausgebildete Nut eingreifen. Bevorzugt sind an dem Seitenteilträger komplementäre Elemente angeordnet, welche eine formschlüssige Verbindung ermöglichen.

Bei einer weiteren bevorzugten Ausführungsform weisen die Blasform- bzw. deren Anbauteile Elemente auf, die in komplementäre Elemente an dem Formträger eingreifen. Auf diese Weise kann ein sicherer Halt der Seitenteile an den Seitenteilträgern erreicht werden.

Dazu sind diese Elemente derart ausgebildet, dass sie eine Winkelposition der Blasform in den Seitenteilträgern eindeutig definieren.

Die vorliegende Erfindung ist weiterhin auf eine Vorrichtung zum Umformen von Kunststoffvorformlingen zu Kunststoffbehältnissen gerichtet, welche einen beweglichen und insbesondere drehbaren Träger aufweist, an dem eine Vielzahl von Umformungsstationen der oben beschriebenen Art angeordnet ist. Bei diesem Träger handelt es sich bevorzugt um ein sogenanntes Blasrad, dem die Kunststoffvorformlinge zugeführt werden und von den einzelnen Umformungsstationen zu Kunststoffbehältnissen und insbesondere Kunststoffflaschen umgeformt werden.

Bei einer bevorzugten Ausführungsform weisen die Seitenteilträger der Umformungsstationen Verstärkungsrippen auf, und die Verstärkungsrippen zweier einander benachbarter Seitenteilträger, welche einander benachbarten Umformungsstationen auf dem Träger zugeordnet sind, sind übereinander versetzt und insbesondere in eine Höhenrichtung der Umformstation gegenüber einander versetzt. Auf diese Weise kann, wie oben erwähnt, Bauraum eingespart werden.

Die vorliegende Erfindung ist weiterhin auf eine Umformungsstation zum Umformen von Kunststoffvorformlingen zu Kunststoffbehältnissen gerichtet, welche eine Blasform zum Umformen von Kunststoffvorformlingen zu Kunststoffbehältnissen ausweist, wobei diese Blasform ein Bodenteil, ein erstes Seitenteil und ein zweites Seitenteil aufweist, und dieses Bodenteil mit den Seitenteilen in einem zusammengesetzten Zustand der Blasform einen Hohlraum ausbildet, innerhalb dessen die Kunststoffvorformlinge zu den Kunststoffbehältnissen expandierbar sind. Weiterhin weist die Vorrichtung eine Trageeinrichtung zum Tragen der Blasform auf, wobei die Trageeinrichtung einen ersten Seitenteilträger und einen zweiten Seitenteilträger aufweist und wobei das erste Seitenteil einem ersten Seitenteilträger und zweite Seitenteil einem zweiten Seitenteilträger angeordnet ist.

Erfindungsgemäß ist wenigstens ein Seitenteil mittels eines Befestigungsmechanismus an dem zugeordneten Seitenträger angeordnet und dieser Befestigungsmechanismus weist einen in einer Spannrichtung bewegbares Spannelement des Befestigungsmechanismus auf, wobei diese Spannrichtung von einer radialen Richtung des Blasformteils abweicht.

Bei einer bevorzugten Ausführungsform ist dieser Befestigungsmechanismus in einen Seitenteilträger integriert. So wäre es möglich, dass dieser Befestigungsmechanismus direkt in die Wandung des Seitenteilträgers eingebaut ist.

Es wird hier damit eine Befestigungsweise vorgeschlagen, bei der nicht wie im Stand der Technik üblich, ein Befestigungselement sich in radialer Richtung von dem Blasformträger wegerstreckt, sondern einer hierzu winkelversetzten Richtung.
Auch durch diese Vorgehensweise kann, wie in den Figuren genauer beschrieben, Bauraum eingespart werden. Üblicherweise erstrecken sich im Stand der Technik diese Spannrichtungen in beispielsweise einer tangentialen Richtung bezogen auf eine Öffnungsbewegung der Blasformen und verursachen - und damit ein hohes Erfordernis an Bauraum. Durch das Abweichen von dieser Richtung kann Bauraum eingespart werden und insbesondere Bauraum, der dadurch benötigt wird, dass benachbarte Blasformen im Arbeitsbetrieb geöffnet werden müssen.

Diese radiale Richtung ist damit insbesondere in Bezug auf einen kreisförmigen Querschnitt der Blasformteile definiert. Genauer kann eine geometrische Zentralachse definiert werden, welche üblicherweise auch eine Zentralachse des zu expandierenden Kunststoffvorformlings ist. Eine radiale Richtung schneidet diese Zentralachse. Die hier beschriebene Spannrichtung steht jedoch windschief in Bezug auf diese Zentralachse und schneidet diese bevorzugt nicht.

Diese vorgeschlagene erfindungsgemäße Ausführungsform kann sowohl bei Varianten eingesetzt werden, welche eine Blasformträgerschale verwenden, als auch bei Varianten, welche nicht über eine derartige Blasformträgerschale verfügen.

Der Befestigungsmechanismus weist einen an den Blasformteil befestigten hintergreifbaren Vorsprung auf, sowie eine Hintergreifelement, welches diesen Vorsprung wenigstens abschnittsweise hintergreift, wobei dieses Hintergreifelement in der Spannrichtung beweglich ist. Dabei ist es möglich, dass dieses Hintergreifelement auf einen Schlitten gelagert ist, der in wiederum in der besagten Spannrichtung beweglich ist und/oder sich in dieser Richtung erstreckt.

Bei einer weiteren vorteilhaften Ausführungsform ist die Spannrichtung gegenüber einer tangentialen Richtung des Seitenteils um einen Winkel geneigt, der geringer ist als 80°, bevorzugt geringer als 70°, bevorzugt geringer als 60°, bevorzugt geringer als 50°, bevorzugt geringer als 40° und besonders bevorzugt geringer als 30° und bevorzugt geringer als 20° und bevorzugt geringer als 15° und besonders bevorzugt geringer als 10°. Durch diese sehr schräge Neigung kann, wie unten genauer erläutert wird, Bauraum der Anlage eingespart werden. Die oben erwähnte radiale Richtung kann bevorzugt auch definiert werden als eine Richtung, die auf einer Ebene senkrecht steht, welche einerseits durch eine Längsrichtung, insbesondere eine vertikale Richtung definiert wird, und andererseits durch eine radiale Hauptrichtung, welche sich von der Umformungsstation in Richtung eines Drehpunkts eines Trägers, an dem die Umformungsstationen angeordnet sind, definiert.

Bei einer weiteren vorteilhaften Ausführungsform ist die Spannrichtung gegenüber der radialen Richtung in einem Winkel angeordnet ist, der von 0° verschieden ist Eine Schar dieser radialen Richtungen liegt bevorzugt in einer Ebene, welche durch die radiale Richtung und die radiale Hauptrichtung definiert wird und bei der es sich insbesondere um eine horizontale Ebene handelt.

Bei einer weiteren vorteilhaften Ausführungsform ist die Spannrichtung gegenüber der tangentialen Richtung bzw. der radialen Richtung um einen Winkel geneigt, der größer ist, als 5°, bevorzugt größer als 7°, bevorzugt größer als 10° und besonders bevorzugt größer als 12°. Diese Winkelbereiche haben sich als besonders günstig erwiesen, um einerseits eine günstige Kraftübertragung zu ermöglichen, andererseits jedoch dies auch mit einem noch vertretbaren Spannweg zu gewährleisten.

Bei einer weiteren vorteilhaften Ausführungsform ist die Spannrichtung gegenüber der radialen Richtung in einem Winkel angeordnet ist, der größer ist als 20°, bevorzugt größer als 30°, bevorzugt größer als 40°, bevorzugt größer als 45°, bevorzugt größer als 50°, bevorzugt größer als 60°, bevorzugt größer als 70° und bevorzugt größer als 75°. Bevorzugt ist die Spannrichtung gegenüber der radialen Richtung in einem Winkel angeordnet, der kleiner ist als 95°, bevorzugt kleiner als 91°. Bei einer weiteren bevorzugten Ausführungsform können die Spannrichtung und die radiale Richtung auch in einem Winkel von 90° zueinander angeordnet sein.

Das Spannelement weist einen druckbeaufschlagbaren Kolben auf. So ist es beispielsweise möglich, dass die Befestigung bei einer entsprechenden Druckbeaufschlagung gelöst wird. Vorteilhaft handelt es sich um einen pneumatisch betätigten Kolben oder hydraulisch betätigten Kolben. Besonders bevorzugt wird ein pneumatisch betätigter Kolben verwendet.

Bei einer weiteren vorteilhaften Ausführungsform weist dieser druckbeaufschlagbare Kolben eine Schrägfläche zum Bewegen des Hintergreifelements auf. Dabei wäre es denkbar, dass diese Schrägfläche des Kolbens mit einer entsprechenden Schrägfläche des Hintergreifelements direkt zusammenwirkt um diese zu bewegen. Es wäre jedoch auch denkbar und bevorzugt, dass diese Schrägfläche ein weiteres Element bewegt und dieses weitere Element wiederum mit einer Schrägfläche des Hintergreifelements zusammenwirkt um dieses zu bewegen.

Bei einer weiteren vorteilhaften Ausführungsform betätigt die Schrägfläche des Kolbenelements ein Spreizelement, welches in einer Richtung bewegbar ist, welche senkrecht zu der Spannrichtung steht.

Dabei kann diese Schrägfläche bevorzugt an einem Endabschnitt des Kolbenelements ausgebildet sein. Bei einer weiteren bevorzugten Ausführungsform weist der druckbeaufschlagbare Kolben zwei Schrägflächen auf, welche jeweils ein oder mehrere Hintergreifelemente zumindest mittelbar betätigen. Bevorzugt sind diese beiden Schrägflächen dachartig bezüglich einander ausgebildet.

Bei einer weiteren vorteilhaften Ausführungsform ist das Hintergreifelement ein Keilelement mit einer Keilfläche. Diese Keilfläche kann dabei bevorzugt gegenüber der Spannrichtung um einen vorgegebenen und insbesondere von 0° verschiedenen Winkel geneigt sein. Dieser Winkel ist bevorzugt größer als 5°, bevorzugt größer als 7°, bevorzugt größer als 10°. Weiter ist dieser Winkel bevorzugt kleiner als 30°, bevorzugt kleiner als 25°, bevorzugt kleiner als 20° und besonders bevorzugt kleiner als 18°.

Bevorzugt die Keilfläche gegenüber der Spannrichtung um einen Winkel geneigt, der beispielsweise 15° beträgt. Dabei ist es bevorzugt möglich, dass diese Keilfläche wiederum senkrecht zu der oben erwähnten radialen Richtung bzw. parallel zu einer tangentialen Richtung steht.

Bei einer weiteren vorteilhaften Ausführungsform ist das Hintergreifelement als hülsenförmiger Körper ausgebildet. Dieser hülsenförmige Körper umgibt dabei bevorzugt den an dem Seitenteil angeordneten Vorsprung und hintergreift diesen.

Besonders bevorzugt ist an diesem hülsenförmigen Hintergreifelement eine Schrägfläche ausgebildet, welche besonders bevorzugt bei Zusammenwirken mit einer weiteren Schrägfläche zum Bewegen des Hintergreifelements dient.

Bei einer weiteren vorteilhaften Ausführungsform ist der Hülsenkörper in einer Richtung beweglich, welche von der Spannrichtung abweicht und welche insbesondere senkrecht zu der Spannrichtung steht. Auf diese Weise wäre es sogar möglich, dass die Spannrichtung senkrecht zu der radialen Richtung der Blasform steht.

Der Befestigungsmechanismus weist ein Federelement auf, welches den Befestigungsmechanismus in eine geschlossene Stellung drängt. Dies bedeutet, dass eine Lösung des befestigten Mechanismus durch Beaufschlagung beispielsweise mit Druckluft erfolgt, dass jedoch der Befestigungsmechanismus üblicherweise, das heißt, ohne äußere Einwirkung in einer geschlossenen Stellung ist. Bevorzugt wirkt dabei auch das Federelement auf den besagten druckbeaufschlagten Kolben

Bei einer weiteren vorteilhaften Ausführungsform ist das Spannelement an dem Seitenteilträger angeordnet. Dies bedeutet, dass der Befestigungsmechanismus bzw. das Spannelement über einen Zugang zum Seitenteilträger betätigt werden kann.

Weiterhin können auch die oben beschriebenen Ausführungsformen auf die hier beschriebene Umformungsstation Anwendung finden.

Die vorliegende Erfindung ist weiterhin auf eine Vorrichtung zum Umformen von Kunststoffvorformlingen zu Kunststoffbehältnissen gerichtet, welche einen beweglichen uns insbesondere drehbaren Träger aufweist, an dem eine Vielzahl von Umformungsstationen der oben beschriebenen Art angeordnet ist.

Weitere Vorteile und Ausführungsformen ergeben sich aus den beigefügten Zeichnungen. Darin zeigen:
- Fig. 1: eine grob-schematische Darstellung einer Vorrichtung zum Umformen von Kunststoffvorformlingen zu Kunststoffbehältnissen;
- Fig. 2: eine Draufsicht auf eine Umformungsstation gemäß der Erfindung;
- Fig. 3: eine Darstellung eines Seitenteilträgers nach dem Stand der Technik;
- Fig. 4: eine Darstellung eines Seitenteilträgers gemäß der Erfindung;
- Fig. 5: eine Darstellung eines Seitenteilträgers mit Blasform und einem Befestigungsmechanismus;
- Fig. 6a, 6b: zwei Darstellungen des Befestigungsmechanismus in zwei unterschiedlichen Positionen;
- Fig. 7a - 7d: vier Darstellungen des Befestigungsmechanismus;
- Fig. 8: eine Detaildarstellung des Befestigungsmechanismus;
- Fig. 9a -9c: drei Darstellungen der Seitenteilträger;
- Fig. 10: eine weitere Darstellung eines alternativen Befestigungsmechanismus;
- Fig. 11a,b: zwei Darstellungen eines weiteren alternativen Befestigungsmechanismus;
- Fig. 12a-c: drei Darstellungen des in den Fig. 11a,b gezeigten Befestigungsmechanismus.

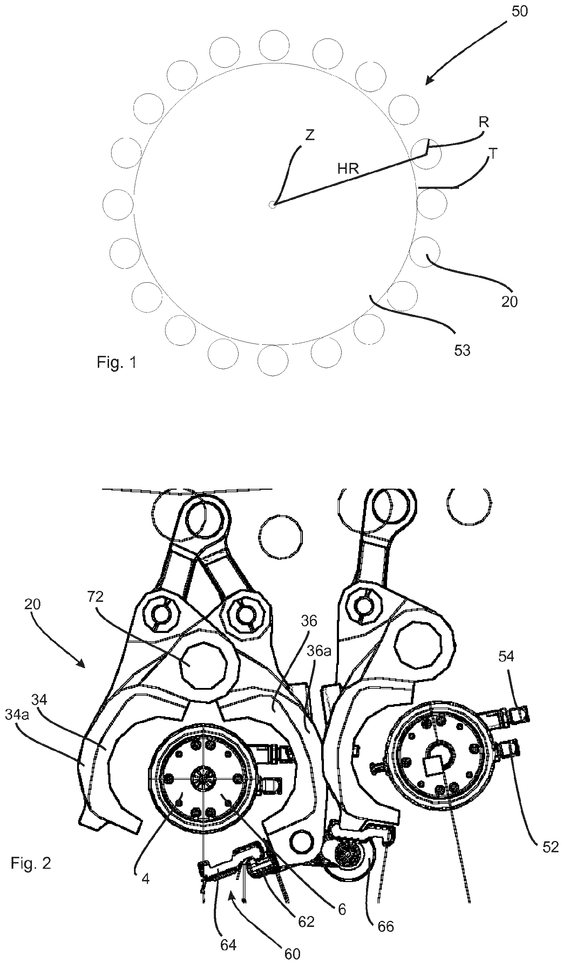

Figur 1 zeigt eine grob-schematische Darstellung einer Vorrichtung zum Umformen von Kunststoffvorformlingen zu Kunststoffbehältnissen. Diese Vorrichtung weist dabei einen drehbaren Träger 53 auf, an dem eine Vielzahl von Umformungsstationen 20 angeordnet ist. Diese Umformungsstationen können jeweils Kunststoffvorformlinge aufnehmen und durch beaufschlagende Druckluft zu Kunststoffbehältnissen expandieren. Das Bezugszeichen HR kennzeichnet eine radiale Hauptrichtung, welche sich von dem Drehpunkt Z des Trägers 53 zu einem geometrischen Mittelpunkt M der einzelnen Umformungsstationen erstreckt. Das Bezugszeichen R kennzeichnet eine radiale Richtung welche sich ausgehend von dem Mittelpunkt der einzelnen Umformungsstationen erstreckt. Damit ist die radiale Richtung R jeweils auf die einzelnen Umformungsstationen bezogen. Das Bezugszeichen T kennzeichnet eine tangentiale Richtung (tangential bezogen auf die einzelnen Umformungsstationen bzw. Blasformen), welche später noch erläutert wird.

Figur 2 zeigt eine Darstellung einer Umformungsstation 20. Diese Umformungsstation ist hier in einem Zustand gezeichnet, in dem die beiden Seitenteilträger 34 und 36 geöffnet sind. Die Bezugszeichen 34a und 36a beziehen sich auf Verstärkungsrippen, welche an einen Seitenteilträgern 34 und 36 angeordnet sind und welche bezüglich der Blasform, deren Seitenteile 4 und 6 erkennbar sind, nach außen weisen.

Das Bezugszeichen 60 kennzeichnet einen Verriegelungsmechanismus um in einem Arbeitsbetrieb die beiden Seitenteilträger 34 und 36 miteinander zu verriegeln. Auf diese Weise wird auch die Blasform in einem geschlossenen Zustand gehalten.

Das Bezugszeichen 72 kennzeichnet eine Welle bezüglich derer die beiden Seitenteilträger 36 schwenkbar sind. Diese Welle erstreckt sich hier senkrecht zur Figurenebene, das heißt im Arbeitsbetrieb in einer vertikalen Richtung.

Der Verriegelungsmechanismus 60 weist ein Verriegelungselement 62 auf (welches hier jedoch getrennt von dem Seitenteilträgerteil 34 dargestellt ist), welches in einem Arbeitsbetrieb mit einem zweiten Verriegelungselement 64 zusammen- bzw. ineinandergreift.

Die Bezugszeichen 52 und 54 kennzeichnen Temperiermittelanschlüsse, welche zum Temperieren des Bodenteils der Blasform dienen.

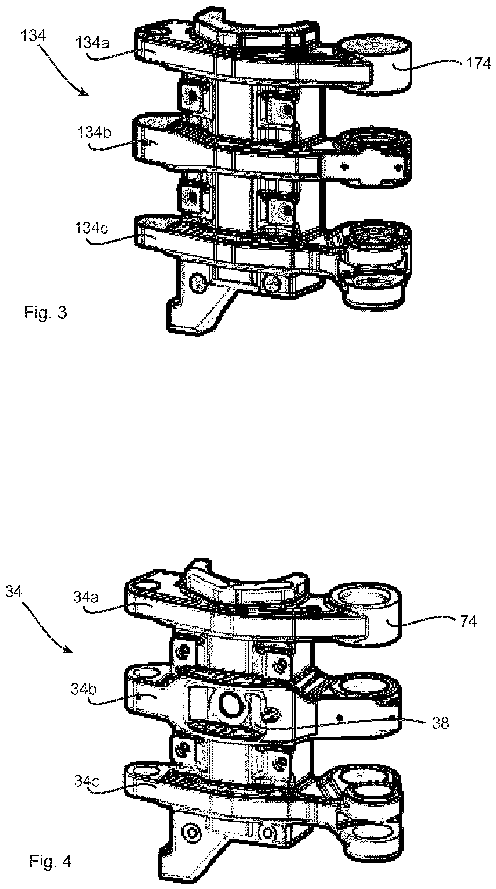

Figur 3 zeigt einen Seitenteilträger 134 nach dem internen Stand der Technik der Anmelderin. Weiterhin weist der Seitenteilträger 134 drei Verstärkungsrippen 134 a, 134 b und 134 c auf, welche sich hier in einem Arbeitsbetrieb horizontal erstrecken. Diese Verstärkungsrippen weisen auch die Gelenkverbindungen 174 auf, mit denen der Seitenteilträger an der in Figur 2 gezeigten Welle 72 schwenkbar angelenkt wird.

Figur 4 zeigt einen erfindungsgemäßen Seitenteilträger 34. Auch dieser Seitenteilträger weist drei Verstärkungsrippen 34 a, 34 b und 34 c auf. Das Bezugszeichen 38 kennzeichnet eine Ausnehmung, in der ein Befestigungsmechanismus (nicht gezeigt) angeordnet ist, um das entsprechende Seitenteil (der nicht gezeigten) Blasform unmittelbar an dem Seitenteilträger 34 anzuordnen. Diese Ausnehmung kann dabei derart gestaltet sein, dass der Befestigungsmechanismus auch schrägt angeordnet sein kann, wie in den nachfolgenden Figuren erläutert.

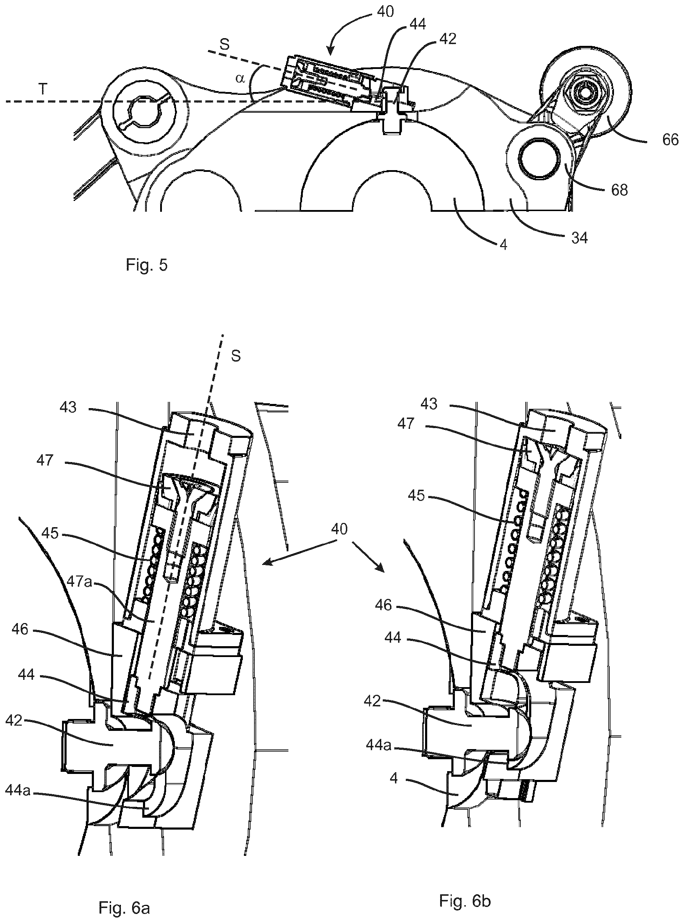

Figur 5 zeigt eine schematische Darstellung eines Seitenteils 4 einer Blasform, welche an dem Seitenteilträger 34 angeordnet ist. Dabei erkennt man, dass das Seitenteil 4 unmittelbar an dem Formträgerteil angeordnet ist, das heißt, ohne eine dazwischen gelegte Formträgerschale.

Das Bezugszeichen 42 kennzeichnet einen an dem Seitenteil 4 angeordneten Vorsprung, der zum Halten des Seitenteils 4 dient. Dieser Vorsprung 42 kann dabei in das Seitenteil eingeschraubt, eingeklebt, eingeklemmt, eingeschweißt oder in anderer Verweise kraftschlüssig daran angeordnet sein. Dieser Vorsprung 42 wird von einem Hintergreifmittel 44 hintergriffen und in Richtung des Seitenteilträgers gezogen. Das Bezugszeichen 40 kennzeichnet entsprechend den gesamten Befestigungsmechanismus.

Das Bezugszeichen S kennzeichnet eine Spannrichtung, in der ein Kolben bewegbar ist, an dem wiederum das Hintergreifmittel 44 angeordnet ist. Das Bezugszeichen T kennzeichnet eine tangentiale Richtung, welche in einem geschlossenen Zustand der Blasform tangential an der Blasform anliegt. Ein Winkel zwischen dieser tangentialen Richtung T und der Spannrichtung s kann beispielsweise zwischen 10 und 20°, bevorzug zwischen 12 und 18° und bevorzugt zwischen 13 und 17° liegen. Die Spannrichtung kann dabei eine geometrische Zentralachse der einzelnen Umformungsstationen nicht schneiden.

Die Figuren 6a und 6b zeigen den Befestigungsmechanismus 40 in zwei unterschiedlichen Positionen. Insbesondere handelt es sich hierbei um Druckluft, welche bewirkt, dass ein Kolbenelement 47 bzw. ein Kolben 47 a in der Spannrichtung S bewegt werden, und zwar hier nach unten gedrückt werden. Dies bewirkt eine Öffnung des Befestigungsmechanismus 40. Das Bezugszeichen 45 kennzeichnet eine Federungseinrichtung bzw. eine Feder, welche in einem nicht mit einem Druckmittel beaufschlagten Zustand den Kolben 47 nach oben, das heißt in eine gespannte Stellung drückt.

Das Bezugszeichen 44 kennzeichnet ein Arretiermittel, welches von dem Bolzen 42, der an der Blasform 4 angeordnet ist, hintergriffen wird und diesen so in Figur 6a nach rechts ziehen kann.

Bei dem in Figur 6a gezeigten Zustand ist der Befestigungsmechanismus gelöst bzw. die Blasform könnte von dem Seitenteilträger gelöst werden. Bei dem in Figur 6b gezeigten Zustand ist der Kolben 47 nach oben zugestellt und das Befestigungsmittel ist geschlossen, was dazu führt, dass auch die Blasform sicher an dem Blasformträger arretiert ist.

Es wird daher im Rahmen dieser Erfindung eine Keilverriegelung vorgeschlagen. Dabei ist der Fixierbolzen bzw. der Vorsprung 42 der Blasform über einen Schlüssellochausschnitt in einen Keil 44 gespannt. Durch die besagte Anordnung unter 45°, sowohl der Federungseinrichtung 45 als auch des Entriegelungszylinders 47a, ist eine aufwendige Pleuelbetätigung nicht nötig. Auf diese Weise können geringere Kosten erreicht werden, da einfachere und weniger Bauteile vorliegen.

Eine aktive Entriegelung führt zu einem prozesssicheren und störungsfreien Handling der Form. Die Haltekontaktfläche ist größer als aus dem Stand der Technik bekannten Systemen, was den Verschleiß weiterhin reduziert. Durch die 15° Keilgeometrie wird auch die Haltekraft vergrößert. Der Spannweg ist dreimal größer und ein Ausfall durch Verschleiß ist durch den hohen automatischen Nachstellweg ausgeschlossen. Die sehr kleine Verriegelungseinheit kann auch in jeden beliebigen Formträger integriert werden, das heißt auch für schmale bzw. kleine Blasformen.

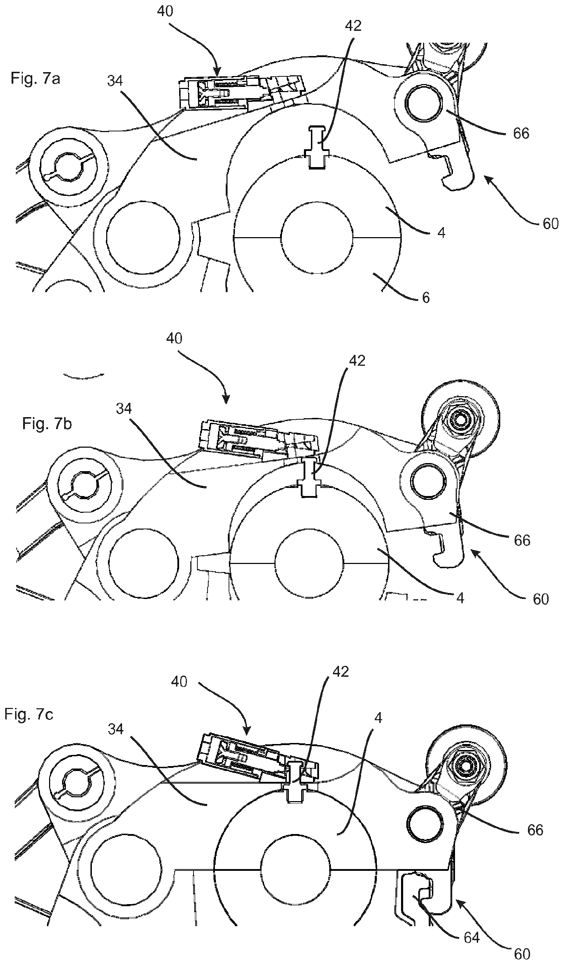

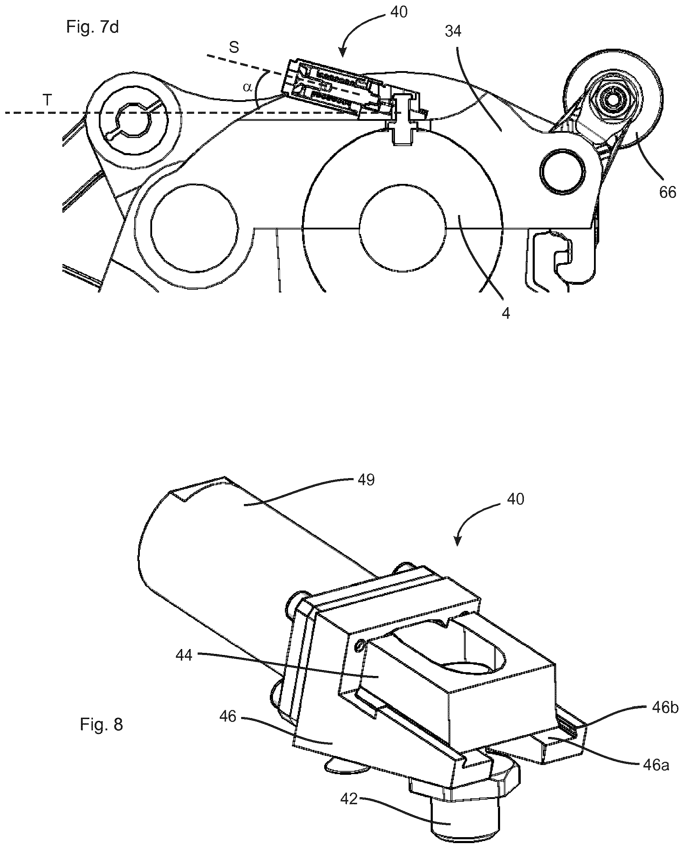

Die Figuren 7a bis 7d zeigen vier Darstellungen zur Verriegelung der Blasform. Bei der in Figur 7a gezeigten Situation ist der Seitenteilträger 34 noch von dem Seitenteil 4 beabstandet und der Befestigungsmechanismus 40 ist in einem entriegelten Zustand beispielsweise durch Druckbeaufschlagung mit 9,5 bar. In dem in Figur 7b und 7c gezeigten Zustand wird der Seitenteilträger 34 um das Seitenteil 4 geschlossen. Dies erfolgt durch Schließen beider Seitenteilträger 34 und (nicht gezeigt) 36 bezüglich der Blasformseitenteile. Man erkennt in Figur 7c, dass der Vorsprung nunmehr vollständig in das Loch des Verriegelungsmittels bzw. des Keilelements 44 eingegriffen ist. Das Befestigungssystem 44 befindet sich immer noch in einem geöffneten Zustand. Wenn nunmehr, wie in Figur 7d gezeigt, das System drucklos geschalten wird, verriegelt sich die Federungseinrichtung 45 und der Befestigungsmechanismus 40. Hierbei wird das Verriegelungselement 44 entlang der Spannrichtung, das heißt hier: schräg nach links bewegt und hintergreift somit den Vorsprung 42. Das Seitenteil der Blasform ist nunmehr an dem Formteilträger 34 befestigt.

Figur 8 zeigt eine weitere Detail-Darstellung des Befestigungsmechanismus 40. Hier ist wieder das Keilelement 44 dargestellt, welches gegenüber der Oberfläche 46a, welche dem oben genannten Winkel von 15° geneigt ist, verschiebbar ist. Das Bezugszeichen 46b kennzeichnet eine Schwalbenschwanzführung, um das Keilelement 44 zu halten. Das Element 46 ist hingegen stationär. Das Bezugszeichen 49 kennzeichnet eine Führungshülse, innerhalb derer der Kolben sowie auch die Federungseinrichtung 45 angeordnet sind.

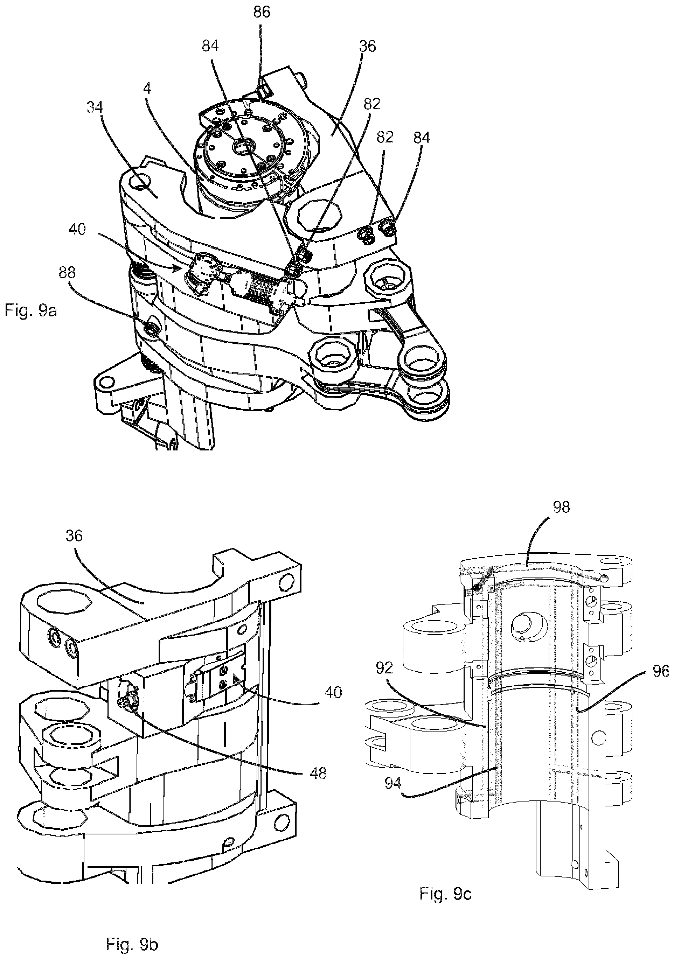

Fig. 9a zeigt eine Umformungsstation. Dabei sind die beiden Seitenteilträger 34, 36 dargestellt sowie das an dem Seitenteilträger 34 angeordnete Blasformteil 4. Daneben ist auch der Befestigungsmechanismus 40 erkennbar. Die Bezugszeichen 82 und 84 beziehen sich auf Medienkupplungen, welche dazu dienen um den Seitenteilträgern 34 und 36 ein Temperiermittel zuzuführen. Auf diese Weise können die Seitenteilträger und mit ihnen auch die Blasformen temperiert, beispielsweise gekühlt werden.

Das Bezugszeichen 88 kennzeichnet einen Stoßdämpfer um beim Schließen der Blasform auftretende Stöße zu dämpfen. Das Bezugszeichen 86 kennzeichnet einen Anschlag bzw. ein Anschlagmittel, welches zwischen dem Seitenteilträger und dem Seitenteil wirkt.

Fig. 9b zeigt den Seitenteilträger 36 mit dem daran angeordneten Befestigungsmechanismus 40. Das Bezugszeichen 48 kennzeichnet einen Pneumatikanschluss. Mittels dieses Pneumatikanschlusses 48 kann der Befestigungsmechanismus zum Lösen desselben mit Druckluft beaufschlagt werden.

Fig. 9c zeigt eine weitere Darstellung des Seitenteilträgers. Dabei sind auch die Kanäle 92, 94, 96 und 98 für das Temperiermittel erkennbar, welches im Inneren des Seitenteilträgers strömen kann, um diesen zu temperieren. Dabei verlaufen diese Kanäle bevorzugt jeweils geradlinig und bevorzugt teilweise in einer vertikalen Richtung und teilweise in einer horizontalen Richtung. Auf diese Weise kann ein Temperiermittel innerhalb des Seitenteilträgers verteilt werden, um diesen vollständig zu temperieren.

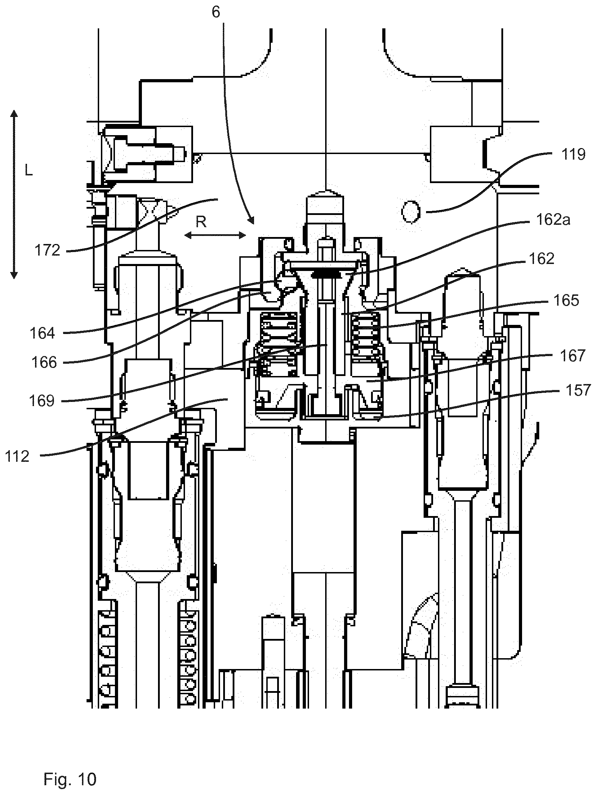

Es wird jedoch darauf hingewiesen, dass anstelle des in den vorangegangenen Figuren gezeigten Befestigungsmechanismus auch ein anderer aus dem internen Stand der Technik der Anmelderin bekannter Befestigungsmechanismus verwendet werden kann. Dieser Befestigungsmechanismus 40 ist in Figur 10 dargestellt und sowohl für die Befestigung der Bodenform, als auch für die Befestigung der Seitenteile anwendbar.

Dabei ist ein Löseelement 162 vorgesehen, welches in einem normalen Betriebszustand durch ein Federelement 165 nach unten gedrückt wird. Auf diese Weise wird durch die Schrägfläche 162 a das Arretier-Element 164 nach außen gedrückt und greift auf diese Weise in ein Befestigungselement 166 ein. Durch diesen Eingriff kann eine Trennung zwischen dem Element 172 und dem Träger 112 verhindert werden. Falls nun ein Aufnahmeraum 167 mit Druckluft beaufschlagt wird, wird sich das Stellelement 162 nach oben bewegen und auf diese Weise wird sich das Arretier-Element 164 wieder zurückziehen und dadurch nicht mehr im Eingriff mit dem Befestigungselement 166 stehen. In dieser Position kann das Befestigungselement 119 und damit auch das Seitenteil hier in der Richtung L abgehoben werden.

Es wird darauf hingewiesen, dass Figur 10 einen Befestigungsmechanismus für ein Bodenteil zeigt, dieser jedoch in analoger Weise auch für die Befestigung der Seitenteile verwendet werden kann.

Gleichzeitig ist es auch möglich, dass Anschlusseinrichtungen getrennt werden können, wenn auch zeitlich verzögert. Das Bezugszeichen 169 bezieht sich auf eine Führungseinrichtung, welche zum Führen des Löseelements 162 dient. Diese Führungseinrichtung 169 kann dabei in eine Bohrung des Löseelements 162 eingreifen, so dass das Löseelement 162 gegenüber der Führungseinrichtung 169 gleiten kann, dabei jedoch durch diese Führungseinrichtung 169 geführt wird. Damit ist das Arretier-Element in der in Figur 10 gezeigten Richtung R bewegbar.

Allgemein kann im Rahmen der Erfindung ein Befestigungsmechanismus verwendet werden, der mittels eines fließfähigen Mediums betätigbar ist, um das Seitenteil gegenüber dem Seitenteilträger zu entriegeln. Bevorzugt ist wenigstens ein Befestigungsmechanismus derart gestaltet, dass er in einem bezüglich des flüssigen bzw. fließfähigen Mediums drucklosen Zustand in einem verriegelten Zustand ist. Vorteilhaft ist der Befestigungsmechanismus durch Beaufschlagung mit einem vorgegebenen Druck des fließfähigen Mediums von einem verriegelten in einen entriegelten Zustand bringbar, wobei dieser Druck bevorzugt größer als 2 bar, bevorzugt größer als 4 bar und besonders bevorzugt größer als 6 bar ist.

Bei einer weiteren bevorzugten Ausführungsform weist der Befestigungsmechanismus eine Vorspanneinrichtung auf, welche kraft- und/oder formschlüssig wenigstens ein Blasformteil an dem diesen Blasformteil zugeordneten Seitenteilträger fixiert. Bevorzugt ist diese Vorspanneinrichtung von dem fließfähigen Medium beaufschlagbar.

Bei einer weiteren bevorzugten Ausführungsform weist der Befestigungsmechanismus einen beweglichen Kolben auf, der über das fließfähige Medium in eine erste Position verschiebbar und/oder über eine Vorspanneinrichtung in eine zweite Position verschiebbar ist.

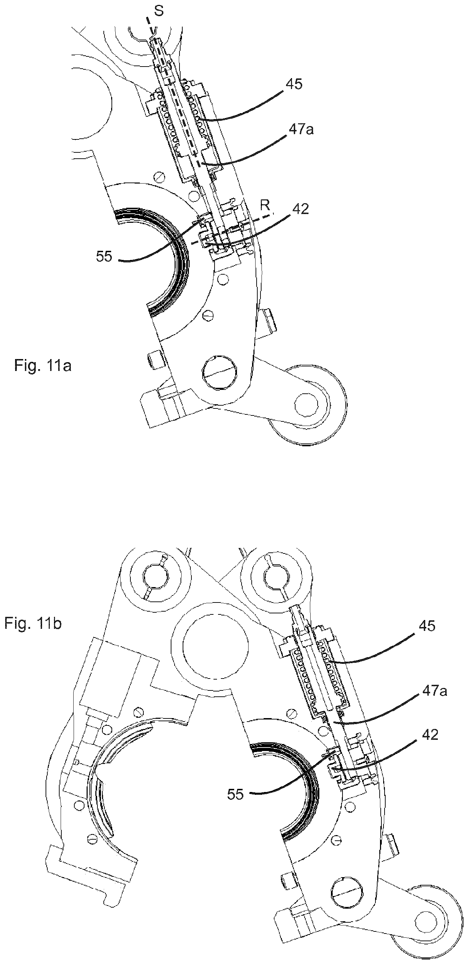

Die Figuren 11a und 11b zeigen eine weitere Ausführungsform eines Befestigungsmechanismus. Bei dieser Ausführungsform ist die Spannrichtung senkrecht zu der oben erwähnten radialen Richtung R des Blasformteils bzw. sogar parallel zu der oben erwähnten tangentialen Richtung. Bei dieser Ausführungsform ist das Hintergreifelement als hülsenförmiger Körper ausgebildet, der den Vorsprung 42 umgibt und hintergreift. Dieser hülsenförmige Körper 55 ist in der radialen Richtung R der Blasform beweglich. In Fig. 11a ist ein verriegelter Zustand der Blasform gezeigt und in Fig. 11b bei entriegelter Zustand. Der hülsenförmige Körper kann dabei gegenüber dem Seitenteilträger in der Richtung R beweglich sein.

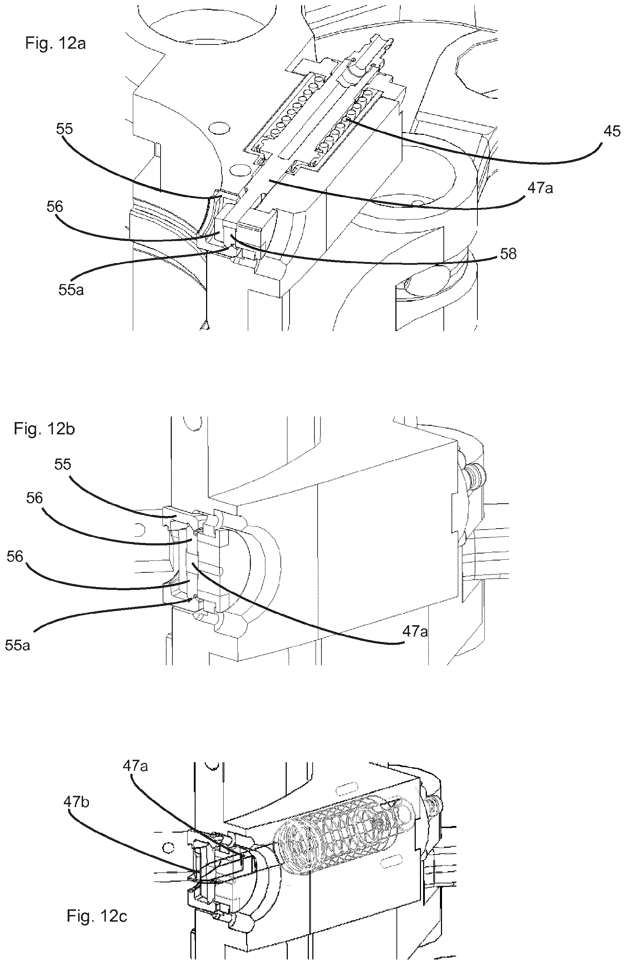

Die Figuren 12a - 12c zeigen drei Darstellungen des in den Figuren 11a - 11c gezeigten Befestigungsmechanismus. Man erkennt auch hier wiederum in Fig. 12a das Kolbenelement 47a, welches in einen Führungskörper 57 eingreift. Dieser Führungskörper 57 ist hier bevorzugt stationär gegenüber dem Seitenteilträger angeordnet. Durch eine Bewegung des Kolbenelements 47a in der Spannrichtung kann ein Spreizkörper 56 bewegt werden, genauer in der Fig. 12b nach unten bzw. in einer radialen Richtung des Hülsenkörpers 55.

Hierdurch bewegt sich eine Schrägfläche dieses Spreizkörpers gegenüber einer Schrägfläche 55a des hülsenförmigen Körpers 55 und der Hülsenkörper wird wie oben erwähnt bewegt. Damit kommt hier eine Bewegung des hülsenförmigen Körpers mittelbar durch eine Bewegung des Kolbenelements und eine Kraftübertragung von dem Kolbenelement 47a auf das Spreizelement 56 und von diesem wiederum auf den hülsenförmigen Körper zustande. In Fig. 12c ist auch ein Endabschnitt des Kolbenelements 47a gezeigt. Dieser Endabschnitt 47a weist zwei Schrägflächen 47b auf, welche bei einer Bewegung des Kolbenelements eine Bewegung des Spreizkörpers 56 und damit letztlich auch des hülsenförmigen Körpers 55 bewirken.

### Bezugszeichenliste

- 4: Seitenteil der Blasform
- 6: Seitenteil der Blasform
- 20: Umformungsstation
- 34: Seitenteilträger
- 34a-c: Verstärkungsrippen
- 36: Seitenteilträger
- 36a-c: Verstärkungsrippen
- 38: Ausnehmung
- 40: Befestigungsmechanismus
- 42: Vorsprung
- 44: Arretiermittel, Keil
- 45: Federungseinrichtung
- 46: Element des Befestigungsmechanismus
- 46a: Oberfläche des Elements 46
- 46b: Schwalbenschwanzführung
- 47: Kolbenelement
- 47a: Kolben
- 47b: Schrägfläche
- 48: Pneumatikanschluss
- 52, 54: Temperiermittelanschlüsse
- 53: drehbarer Träger
- 55: hülsenförmiges Hintergreifelement
- 55a: Schrägfläche des hülsenförmigen Hintergreifelements
- 56: Spreizkörper
- 60: Verriegelungsmechanismus
- 62: erstes Verriegelungselement
- 64: zweites Verriegelungselement
- 72: Welle
- 112: Träger
- 119: Befestigungselement
- 134,136: Seitenteilträger (SdT)
- 134a - c: Verstärkungsrippen (SdT)
- 162: Löseelement
- 162a: Schrägfläche
- 164: Arretierelement
- 165: Federelement
- 166: Befestigungselement
- 169: Führungseinrichtung
- 172: Element
- 174: Gelenkverbindung

- HR: radiale Hauptrichtung
- R: radiale Richtung
- Z: Drehpunkt
- M: geometrische Zentralachse der Umformungsstationen
- S: Spannrichtung
- T: tangentiale Richtung
- L: Richtung

## Patentansprüche

1. Umformungsstation (20) zum Umformen von Kunststoffvorformlingen zu Kunststoffbehältnissen mit einer Blasform (1) zum Umformen von Kunststoffvorformlingen zu Kunststoffbehältnissen welche Blasform ein Bodenteil, ein erstes Seitenteil (4) und ein zweites Seitenteil (6) aufweist, wobei dieses Bodenteil mit den Seitenteilen (4, 6) in einem zusammengesetzten Zustand der Blasform einen Hohlraum ausbilden, innerhalb dessen die Kunststoffvorformlinge zu den Kunststoffbehältnissen expandierbar sind und mit einer Trageeinrichtung zum Tragen der Blasform, wobei die Trageeinrichtung einen ersten Seitenteilträger (34) und einen zweiten Seitenteilträger (36) aufweist und wobei das erste Seitenteil (4) an dem ersten Seitenteilträger (34) und das zweite Seitenteil (6) an dem zweiten Seitenteilträger (36) angeordnet ist und wenigstens ein Seitenteil (4 ,6) mittels eines Befestigungsmechanismus (40) an dem ihm zugeordneten Seitenteilträger (34, 36) angeordnet ist und dieser Befestigungsmechanismus (40) ein in einer Spannrichtung (S) bewegbares Spannelement (47,47a) zum Spannen des Befestigungsmechanismus aufweist, wobei diese Spannrichtung (S) von einer radialen Richtung (R) des Blasformteils (4, 6) abweicht, **dadurch gekennzeichnet, dass**
wobei die radiale Richtung (R) in Bezug auf einen kreisförmigen Querschnitt der Blasformteile (4, 6) definiert ist und eine Zentralachse (M) schneidet, welche auch eine Zentralachse (M) des expandierbaren Kunststoffvorformlings ist und die Spannrichtung (S) windschief in Bezug auf diese Zentralachse (M) steht und diese nicht schneidet und wobei der Befestigungsmechanismus (40) einen an dem Blasformteil (4, 6) befestigten hintergreifbaren Vorsprung (42) aufweist sowie ein Hintergreifelement (44, 48), welches diesen Vorsprung (42) wenigstens abschnittsweise hintergreift, wobei dieses Hintergreifelement (44) in der Spannrichtung (S) beweglich ist, wobei das Spannelement (47,47a) einen druckbeaufschlagbaren Kolben (47a) aufweist und das Hintergreifelement (44) ein Keilelement (44) mit einer Keilfläche ist und der Befestigungsmechanismus (40) ein Federelement (45) aufweist, welches den Befestigungsmechanismus (40) in eine geschlossene Stellung drängt.

2. Umformungsstation nach Anspruch 1,
**dadurch gekennzeichnet, dass**
die Spannrichtung (S) gegenüber der radialen Richtung (R) in einem Winkel (α) angeordnet ist, der von 0° verschieden ist.

3. Umformungsstation nach wenigstens einem der vorangegangenen Ansprüche,
**dadurch gekennzeichnet, dass**
die Spannrichtung (S) gegenüber der radialen Richtung (R) in einem Winkel (α) angeordnet ist, der größer ist als 20°, bevorzugt größer als 30°, bevorzugt größer als 40°, bevorzugt größer als 45°, bevorzugt größer als 50°, bevorzugt größer als 60°, bevorzugt größer als 70° und bevorzugt größer als 75°.

4. Umformungsstation (20) nach Anspruch 1,
**dadurch gekennzeichnet, dass**
an dem druckbeaufschlagbaren Kolben (47a) eine Schrägfläche (47b) zum Bewegen des Hintergreifelements (55) ausgebildet ist.

5. Umformungsstation (20) nach Anspruch 1,
**dadurch gekennzeichnet, dass**
die Keilfläche gegenüber der Spannrichtung (S) um einen vorgegebenen und von 0° verschiedenen Winkel geneigt ist.

6. Umformungsstation (20) nach Anspruch 1,
**dadurch gekennzeichnet, dass**
das Hintergreifelement als hülsenförmiger Körper (55) ausgebildet ist.

7. Umformungsstation (20) nach dem vorangegangenen Anspruch,
**dadurch gekennzeichnet, dass**
der hülsenförmige Körper (55) in einer Richtung beweglich ist, welche von der Spannrichtung (R) abweicht und welche insbesondere senkrecht zu der Spannrichtung (R) steht.

8. Umformungsstation (20) nach wenigstens einem der vorangegangenen Ansprüche,
**dadurch gekennzeichnet, dass**
das Spannelement (47, 47a) an dem Seitenteilträger (34, 36) angeordnet ist.

9. Umformungsstation (20) nach wenigstens einem der vorangegangenen Ansprüche,
**dadurch gekennzeichnet, dass**
wenigstens ein Seitenteil (4, 6) an dem ihm zugeordneten Seitenteilträger mittels eines Befestigungsmechanismus (40) befestigt ist und wenigstens ein Bestandteil dieses Befestigungsmechanismus durch eine in dem Seitenteilträger angeordnete Öffnung (43) geführt ist.

10. Umformungsstation (20) nach dem vorangegangenen Anspruch,
**dadurch gekennzeichnet, dass**
die Öffnung (43) in einem verstärkten Abschnitt des Seitenteilträgers (4, 6) angeordnet ist.

11. Vorrichtung (50) zum Umformen von Kunststoffvorformlingen zu Kunststoffbehältnissen mit einem beweglichen und insbesondere drehbaren Träger, an dem eine Vielzahl von Umformungsstationen (20) nach wenigstens einem der vorangegangenen Ansprüche angeordnet ist.

## Claims

1. Reshaping station (20) for reshaping plastic parisons into plastic containers with a blow mould (1) for reshaping plastic parisons into plastic containers, this blow mould having a base part, a first side part (4) and a second side part (6), wherein, in an assembled state of the blow mould, this base part with the side parts (4, 6) form a hollow space within which the plastic parisons can be expanded to form the plastic containers and a carrier device for carrying the blow mould, wherein the carrier device has a first side part carrier (34) and a second side part carrier (36) and wherein the first side part (4) is arranged on the first side part carrier (34) and the second side part (6) is arranged on the second side part carrier (36), and at least one side part (4, 6) is arranged on the side part carrier (34, 36) associated with it by means of a fastening mechanism (40), and this fastening mechanism (40) has a tensioning element (47, 47a) which is movable in a tensioning direction (S) for tensioning the fastening mechanism, wherein this tensioning direction (S) deviates from a radial direction (R) of the blow mould part (4, 6),
**characterised in that**
wherein the radial direction (R) is defined with respect to a circular cross-section of the blow mould parts (4, 6) and intersects a central axis (M), which is also a central axis (M) of the expandable plastic parison and the tensioning direction (S) is inclined relative to the central axis (M) and does not intersect the same and wherein the fastening mechanism (40) has a projection (42) which can be engaged behind and is fastened on the blow mould part (4, 6) as well as an engagement element (44, 48) which engages behind this projection (42) at least in sections, wherein this engagement element (44) is moveable in the tensioning direction (S), wherein the tensioning element (47, 47a) has a piston (47a) to which pressure can be applied and the engagement element (44) is a wedge element (44) with a wedge surface and the fastening mechanism (40) has a spring element (45) which forces the fastening mechanism (40) into a closed position.

2. Reshaping station according to claim 1,
**characterised in that**
the tensioning direction (S) is arranged relative to the radial direction (R) at an angle different from 0°.

3. Reshaping station according to at least one of the preceding claims,
**characterised in that**
the tensioning direction (S) is arranged relative to the radial direction (R) at an angle (a) greater than 20°, preferably greater than 30°, preferably greater than 40°, preferably greater than 45°, preferably greater than 50°, preferably greater than 60°, preferably greater than 70° and preferably greater than 75°.

4. Reshaping station (20) according to claim 1,
**characterised in that**
an inclined surface (47b) for movement of the engagement element (55) is formed on the piston (47a) to which pressure can be applied.

5. Reshaping station (20) according to claim 1,
**characterised in that**
the wedge surface can be inclined relative to the tensioning direction (S) by a predetermined angle different from 0°.

6. Reshaping station (20) according to claim 1,
**characterised in that**
the engagement element is formed as a sleeve-like body (55).

7. Reshaping station (20) according to the preceding claim,
**characterised in that**
the sleeve-like body (55) is movable in a direction which deviates from the tensioning direction (R) and which in particular is perpendicular to the tensioning direction (R).

8. Reshaping station (20) according to at least one of the preceding claims,
**characterised in that**
the tensioning element (47, 47a) is arranged on the side part support (34, 36).

9. Reshaping station (20) according to at least one of the preceding claims,
**characterised in that**
at least one side part (4, 6) is fastened to the side part carrier associated with it by means of a fastening mechanism (40) and at least one component of this fastening mechanism (40) is passed through an opening (43) arranged in the side part carrier.

10. Reshaping station (20) according to the preceding claim,
**characterised in that**
the opening (43) is arranged in a reinforced portion of the side part support (4, 6).

11. Machine (50) for reshaping plastic parisons into plastic containers with a movable and in particular rotatable support, on which a plurality of reshaping stations (20) according to at least one of the preceding claims are arranged.

## Revendications

1. Station de formage (20) pour former des préformes en plastique en des contenants en plastique avec un moule de soufflage (1) pour le formage des préformes en plastique en contenants plastique, le moule de soufflage (1) présentant une partie de fond, une première partie latérale (4) et une deuxième partie latérale (6), la partie de fond formant avec les parties latérales (4, 6) à l'état assemblé du moule de soufflage une cavité dans laquelle les préformes en plastique peuvent être expansées pour former les contenants en plastique et avec un dispositif de support pour supporter le moule de soufflage, dans lequel le dispositif de support présente un premier support de partie latérale (34) et un deuxième support de partie latérale (36) et dans lequel la première partie latérale (4) est agencée sur le premier support de partie latérale (34) et la deuxième partie latérale (6) est agencée sur le deuxième support de partie latérale (36) et au moins une partie latérale (4, 6) est disposée sur le support de partie latérale (34, 36) qui lui est affecté au moyen d'un mécanisme de fixation (40) et ce mécanisme de fixation (40) présente un élément de tension (47, 47a) qui peut être déplacé dans une direction de tension (S) pour tendre le mécanisme de fixation, cette direction de tension (S) s'écartant d'une direction radiale (R) de la partie de moule de soufflage (4, 6),
**caractérisée en ce que**
la direction radiale (R) est définie par rapport à une section transversale circulaire des parties de moule de soufflage (4, 6) et coupe un axe central (M), qui est aussi un axe central (M) de la préforme en plastique expansible et la direction de tension (S) est oblique par rapport à l'axe central (M) et ne coupe pas celui-ci et dans lequel le mécanisme de fixation (40) présente une saillie (42) qui peut être engagée par l'arrière et est fixée au moule de soufflage (4, 6) ainsi qu'un élément d'engagement arrière (44, 48), qui engage la saillie (42) par l'arrière au moins par tronçons, cet élément d'engagement arrière (44) étant mobile dans la direction de tension (S), dans lequel l'élément de tension (47, 47a) présente un piston (47a) qui peut être sollicité par pression et l'élément d'engagement arrière (44) est un élément de coin (44) avec une surface de coin et le mécanisme de fixation (40) présente un élément à ressort (45), qui pousse le mécanisme de fixation (40) vers une position fermée.

2. Station de formage selon la revendication 1,
**caractérisée en ce que**
la direction de tension (S) par rapport à la direction radiale (R) est disposée selon un angle (a) différent de 0 °.

3. Station de formage selon au moins l'une des revendications précédentes,
**caractérisée en ce que**
la direction de tension (S) est disposée à un angle (a) par rapport à la direction radiale (R), qui est supérieur à 20 °, de préférence supérieur à 30 °, de préférence supérieur à 40 °, de préférence supérieur à 45 °, de préférence supérieur à 50 °, de préférence supérieur à 60 °, de préférence supérieur à 70 ° et de préférence supérieur à 75 °.

4. Station de formage (20) selon la revendication 1,
**caractérisée en ce que**
une surface inclinée (47b) pour déplacer l'élément d'engagement arrière (55) est formée sur le piston pressurisable (47a).

5. Station de formage (20) selon la revendication 1,
**caractérisée en ce que**
la surface de coin est inclinée par rapport à la direction de tension (S) selon un angle prédéterminé différent de 0 °.

6. Station de formage (20) selon la revendication 1,
**caractérisée en ce que**
l'élément d'engagement est conçu comme un corps en forme de manchon (55).

7. Station de formage (20) selon la revendication 1,
**caractérisée en ce que**
le corps en forme de manchon (55) est mobile dans une direction qui est différente de la direction de tension (R) et qui, notamment, est perpendiculaire à la direction de tension (R).

8. Station de formage (20) selon au moins l'une des revendications précédentes,
**caractérisée en ce que**
l'élément de tension (47, 47a) est disposé sur le support de partie latérale (34, 36).

9. Station de formage (20) selon au moins l'une des revendications précédentes,
**caractérisée en ce que**
au moins une partie latérale (4, 6) est fixée au support de partie latérale qui lui est affecté au moyen d'un mécanisme de fixation (40) et au moins un composant de ce mécanisme de fixation est guidé à travers une ouverture (43) disposée dans le support de partie latérale.

10. Station de formage (20) selon la revendication précédente,
**caractérisée en ce que**
l'ouverture (43) est disposée dans une section renforcée du support de partie latérale (4, 6).

11. Dispositif (50) de formage de préformes en plastique en contenants en plastique avec un support mobile et, en particulier, rotatif, sur lequel est disposée une pluralité de stations de formage (20) selon au moins l'une des revendications précédentes.
